# EUROPEAN PATENT SPECIFICATION

(11) **EP 1 753 640 B1**
(45) Date of publication and mention of the grant of the patent: **13.07.2011**
(21) Application number: 05748102.0
(22) Date of filing: 06.05.2005
(51) Int. Cl.: B60Q 1/34

(54) **TURN SIGNAL CONTROL SYSTEM FOR A VEHICLE AND TRAILER**
BLINKSIGNALSTEUERSYSTEM FÜR EIN FAHRZEUG UND EINEN ANHÄNGER
SYSTEME DE COMMANDE DE SIGNAL DE VIRAGE POUR VEHICULE ET REMORQUE

(30) Priority: 06.05.2004 US 568710 P
(43) Date of publication of application: 21.02.2007
(73) Proprietor: Club Car Inc., Evans, GA 30809 (US)
(72) Inventor: MCLEOD, Paul, W., Martinez, GA 30907 (US)
(74) Representative: Kramer - Barske - Schmidtchen
(86) International application number: PCT/US2005/015778
(87) International publication number: WO 2005/108166

(56) References cited:
- EP-A- 0 109 730
- DE-A1- 3 531 560
- US-A- 3 337 846
- US-A- 3 428 943
- US-A- 3 562 707
- US-A- 3 858 176
- US-A- 4 179 592
- US-A- 6 069 559

## Description

### BACKGROUND OF THE INVENTION

The present invention relates to vehicles such as golf cars, utility vehicles and neighborhood vehicles, and more particularly turn signal control systems for such vehicles.

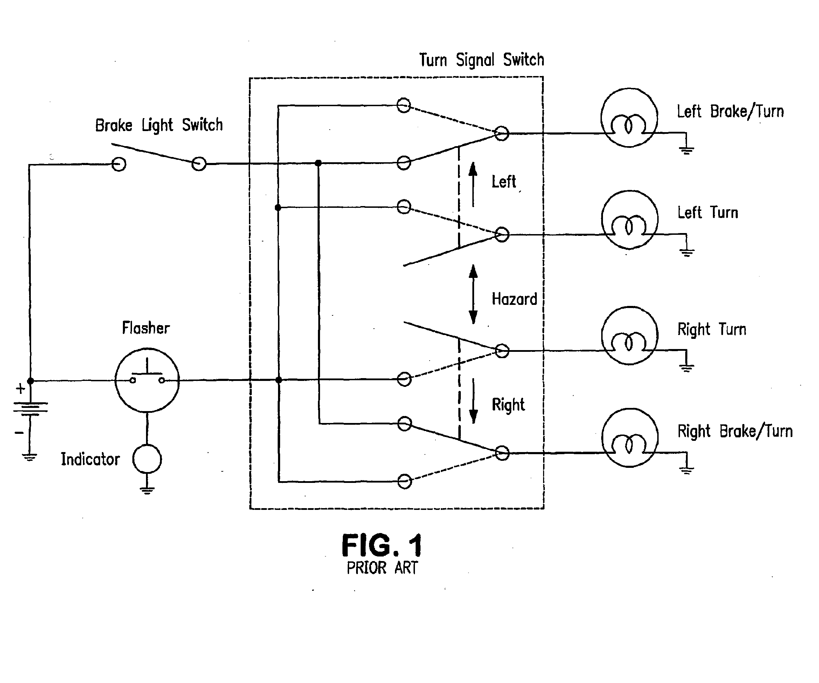

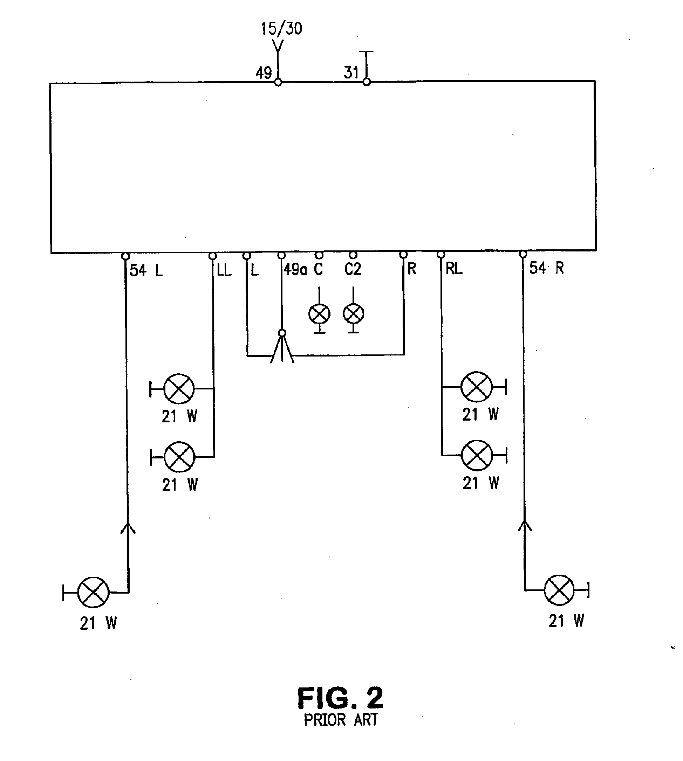

Vehicles such as golf cars, utility vehicles, neighborhood vehicles, tractors and other similar types of vehicles are generally provided with at least two indicators or lights, commonly referred to as "turn signals", mounted to the rear of the vehicle and generally also on the front of the vehicle, which are used to provide notice of an impending turn of the vehicle. Often, particularly with utility vehicles and tractors, the vehicle tows a trailer that also includes a pair of turn signals, which in many cases are operated by controls located in the vehicle operator area (i.e., near the driver's seat). Certain previously known turn signal control systems use relay devices commonly referred to as "flasher relays" units (as opposed to a microprocessor based system) that utilize a single flasher unit, a typical vehicle flasher circuit being shown in Fig. 1. This configuration may provide bulb outage detection for the vehicle signal bulbs, but does not detect outages in trailer lighting (if connected). Fig. 2 shows a turn signal control system designed to detect bulb outages in multiple lighting circuits. This turn signal configuration incorporates a highly specialized, relatively expensive flasher unit that includes a plurality of switches and is tailored to a specific number ofbulbs in each circuit.

DE 35 31 560 A1 discloses a turn signal control system according to the preamble of claim 1.

US-A-3 337 846 discloses another vehicle light system.

### SUMMARY OF THE INVENTION

The present invention is a turn signal control system according to claim 1.

### BRIEF DESCRIPTION OF THE SEVERAL VIEWS OF THE DRAWINGS

The foregoing summary, as well as the detailed description of the preferred embodiments of the present invention, will be better understood when read in conjunction with the appended drawings. For the purpose of illustrating the invention, there is shown in the drawings, which are diagrammatic, embodiments that are presently preferred. It should be understood, however, that the present invention is not limited to the precise arrangements and instrumentalities shown. In the drawings:
Fig. 1 is a schematic view of one type of previously known turn signal switch system for vehicle turn signals;
Fig. 2 is a schematic view of a second type of previously known turn signal switch system for vehicle and/or trailer turn signals;
Fig. 3 is a schematic view of a turn signal control system in accordance with the present invention;
Fig. 4 is a schematic view of an alternative construction of the turn signal control system in accordance with the present invention, which includes separate left and right turn signal activation indicators;
Fig. 5 is schematic view of another alternative construction of the turn signal control system in accordance with the present invention, which includes a vehicle turn signal activation indicator driven parallel to signal bulbs with isolation diodes;
Fig. 6 is a schematic view of a turn signal control system in accordance with the present invention that has been configured for use with a single flasher unit;
Fig. 7 is a more diagrammatic, top plan view of the turn signal control system shown disposed on a vehicle and connected with vehicle and trailer indicators;
Fig. 8 is a more diagrammatic view of a preferred switching device and switch actuator, shown with switching components mounted on separated housing halves;
Fig. 9 is a more diagrammatic, assembled view of the switching device of Fig. 8, shown with the switch actuator in a second position; and
Fig. 10 is another view of the switching device of Fig. 9, shown with the actuator in a third position.

### DETAILED DESCRIPTION OF THE INVENTION

Certain terminology is used in the following description for convenience only and is not limiting. The words "inner", "inwardly" and "outer", "outwardly" refer to directions toward and away from, respectively, a designated centerline or a geometric center of an element being described, the particular meaning being readily apparent from the context of the description. Further, as used herein, the word "connected" is intended to include direct connections between two members without any other members interposed therebetween and indirect connections between members in which one or more other members are interposed therebetween. Furthermore, the use of the terms "including", "comprising" and "having" and variations thereof is intended to encompass the items, elements, components, assemblies, etc. listed thereafter and equivalents thereof, as well as additional items, elements, components, assemblies, etc. The terminology includes the words specifically mentioned above, derivatives thereof, and words or similar import.

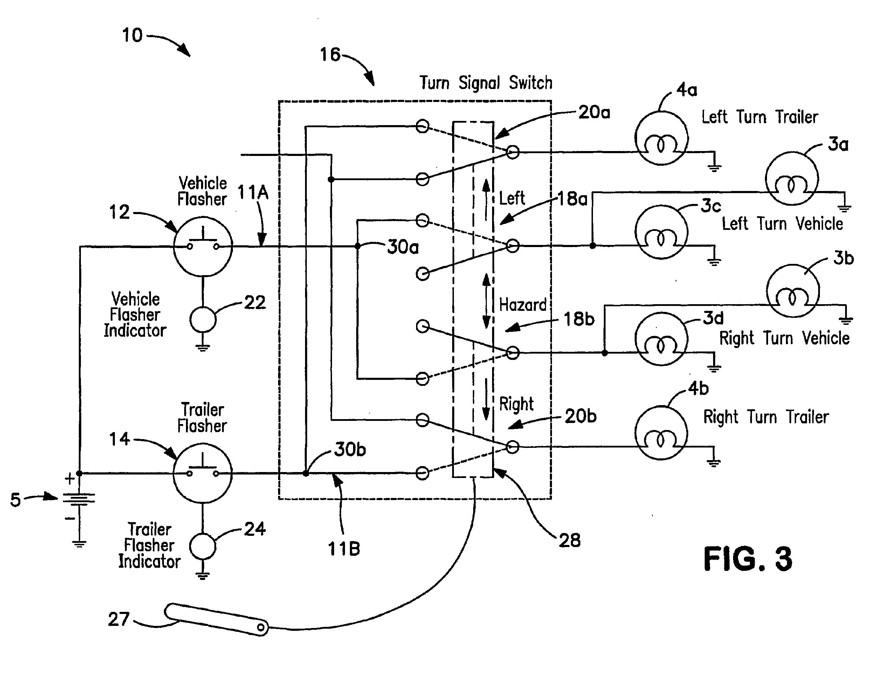

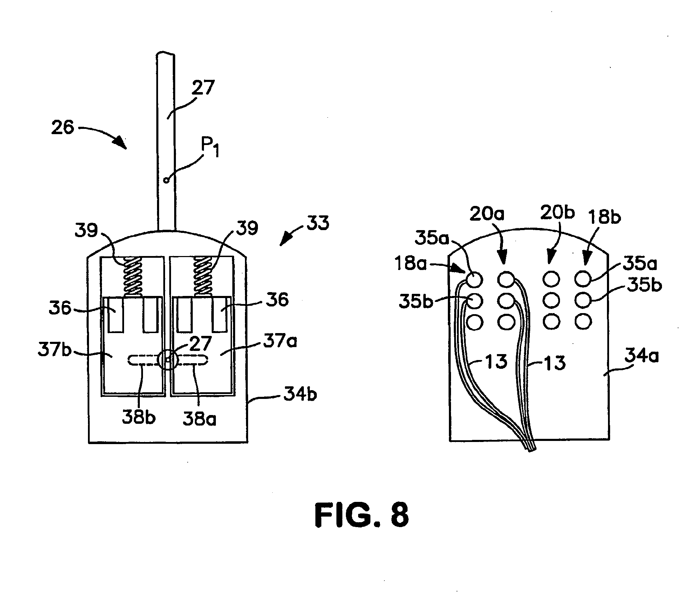

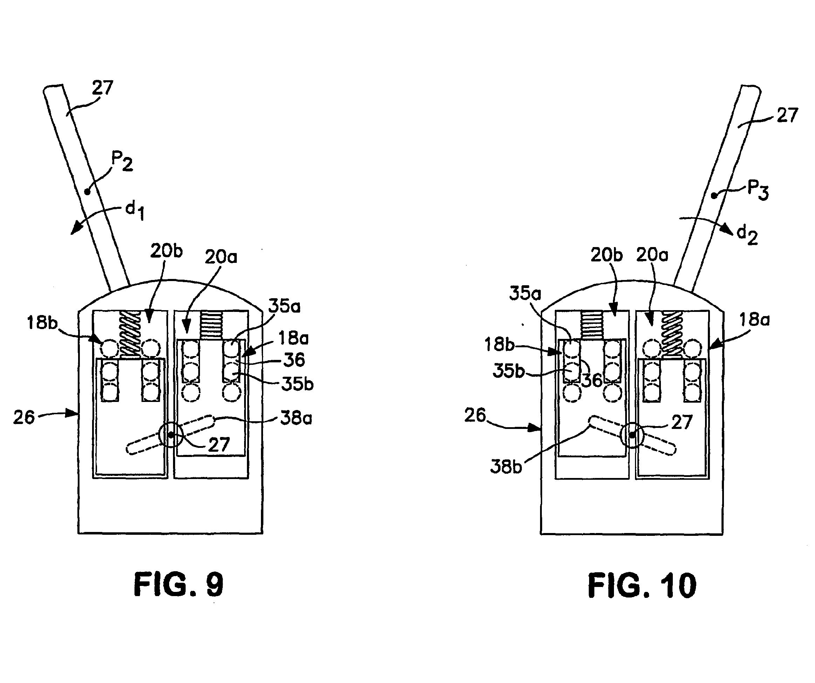

Referring now to the drawings in detail, wherein like numbers are used to indicate like elements throughout, there is shown in Figs. 3-10 presently preferred embodiments of a turn signal control system 10 for a vehicle 1 and a trailer 2 connected with the vehicle 1, in accordance with the present invention. The vehicle 1 and trailer 2 each have at least one turn indicator 3, 4, respectively, the vehicle 1 or/and the trailer 2 including an electrical power source 5, most preferably a battery 6. The turn signal control system 10 basically comprises a first flasher relay 12 electrically coupled with the power source 5, a second flasher relay 14 electrically coupled with the power source 5, and a switching device 16. Each flasher relay 12, 14 is configured regulate the flow of electric current from the power supply 5/battery 6 such that the indicator 3, 4, respectively, receive an intermittently flowing current, causing the indicators 3, 4 periodically illuminate or "flash", as discussed below. The switching device 16 is configured to electrically couple the first flasher relay 12 with the vehicle turn indicator(s) 3 and/or the second flasher relay 14 with the trailer turn indicator(s) 4 and to alternatively decouple the first flasher relay 12 from the vehicle turn indicator(s) 3 and the second flasher relay 14 from the trailer turn indicator(s) 4. Preferably, the switching device 16 includes at least one vehicle indicator switch 18 electrically connected with the one or more vehicle turn indicator 3 and at least one trailer indicator switch 20 electrically connected with the one or more trailer turn indicators 4. Each indicator switch 18, 20 is adjustable between a first state (see, e.g., Fig. 8), in which the connected turn indicator 3, 4, respectively, is noncoupled with or disconnected from the associated flasher relay 12, 14, respectively, and a second state (see, e.g., Figs. 9 and 10) in which the connected turn indicator(s) 3, 4 is electrically coupled with the first and second flasher relay 12, 14, respectively. Thus, when each flasher relay 12, 14 is electrically connected with the associated turn indicator(s) 3, 4, respectively, the turn indicators 3, 4 are intermittently energized to provide a "flashing indication" as discussed in greater detail below.

Preferably, the turn signal control system 10 further includes a first activation indicator 22 electrically coupled with the first flasher relay 12 or/and with the vehicle turn indicator(s) 3 and a second activation indicator 24 electrically coupled with one of the second flasher relay 14 and the trailer turn indicator(s) 4. Each activation indicator 22, 24 is configured to provide an indication, preferably a visible indication, when electric current flowing through the associated turn indicator 3, 4 has a value of at least a predetermined minimum value (e.g., amps) or/and when electric current through the indicator(s) 3, 4 is lesser than the predetermined minimum value. Most preferably, each activation indicator 22, 24 provides a first indication (e.g., continuous light, no light, etc.) when current through the turn indicators 3, 4, respectively, is at or greater than the minimum current value and a second indication (e.g., flashing light, no light, alarm noise, etc.) when current through the associated turn indicators 3, 4 is below the predetermined minimum value. As such, the activation indicators 22, 24 enable a vehicle operator to separately determine when the vehicle turn indicators 3 and the trailer turn indicators 4 are malfunctioning (e.g., burned-out bulb, etc.) or/and when the indicators 3, 4 are operating properly, as described in greater detail below.

Further, the vehicle 1 preferably includes both left and right turn indicators 3 a, 3b and the trailer 2 preferably includes left and right turn indicators 4a, 4b. As such, the switching device 16 is preferably configured to selectively electrically couple the vehicle left turn indicator 3A with the first flasher relay 12 and the trailer left turn indicator 4A with the second flasher relay 14 and to alternatively electrically couple the vehicle right turn indicator 3B with the first flasher relay 12 and the trailer right turn indicator 4B with the second flasher relay 14. Most preferably, the switching device 16 includes first and second vehicle indicator switches 18a, 18b electrically connected with the first flasher relay 12 and first and second trailer indicator switches 20a, 20b each electrically connected with the second flasher relay 14. Further, each vehicle indicator switch 18a, 18b is electrically connected with a separate one of the vehicle left and right indicators 3a, 3b, respectively, and each trailer indicator switch 20a, 20b is electrically connected with a separate one of the trailer indicators 4a, 4b, respectively. Each one of the indicator switches 18a, 18b, 20a, 20b is adjustable between a first (e.g., "open") switch state in which the connected turn indicator 3a, 3b, 4a, 4b, respectively, is noncoupled with the associated flasher relay 12, 14 and a second (e.g., "closed") state in which the connected turn indicator 3a, 3b, 4a, 4b is electrically coupled with the associated flasher relay 12, 14.

Referring to Figs. 8-10, the turn signal control system 10 further comprises an actuator 26 configured to adjust each one of the vehicle first and second indicator switches 18a, 18b and the trailer first and second indicator switches 20a, 20b between the first and second switch states. Preferably, the actuator 26 includes at least one moveable member 28 operatively engageable with each one of the vehicle and trailer indicator switches 18a, 18b, 20a, 20b and configured to displace between first, second and third positions P₁, P₂, P₃, respectively, so as to adjust the switches 18a, 18b, 20a, 20b between the first and second switch states, as follows. In a first actuator position P₁ (Fig. 8), each one of the vehicle first and second indicator switches 18a, 18b and trailer first and second indicator switches 20a, 20b is arranged in the first (e.g., open) switch state, such that none of the indicators 3a, 3b, 4a, 4b are coupled with the associated flash relays 12, 14 and thus do not receive any electric current. When the actuator moveable member(s) 28 is displaced to the second actuator position P₂, as shown in Fig. 9, the vehicle and trailer first indicator switches 18a, 20a are each arranged in the second switch state and the vehicle and trailer second indicator switches 18b, 20b are each arranged in the first switch state. As such, the vehicle left turn indicator 3a and the trailer left turn indicator 4a are each electrically coupled with the associated flasher relay 12, 14, respectively, and thus intermittently illuminate, whereas the vehicle and trailer right turn indicators 3b, 4b, respectively, remain unpowered.

Further, when the actuator moveable member 28 is displaced to the third actuator position P₂ as shown in Fig. 10, the vehicle and trailer second indicator switches 18b, 20b are each arranged in the second switch state and the vehicle and trailer first indicator switches 18a, 20a are each arranged in the first switch state. Thus, the vehicle right turn indicator 3b and the trailer right turn indicator 4b are each electrically coupled with the associated flasher relay 12, 14, respectively, and thus intermittently illuminate, whereas the vehicle and trailer left turn indicators 3b, 4b, respectively, remain unpowered. Preferably, the actuator 26 further includes a second moveable member 30 configured to adjust each one the vehicle and trailer first and second indicator switches 18a, 18b, 20a, 20b to the second switch state, such that all four turn indicators 3a, 3b, 4a, 4b are all coupled with the associated flasher relays 12, 14 and thus each intermittently illuminate, so as to provide a "hazard" condition.

Furthermore, the vehicle left and right turn signal indicators 3a, 3b are "rear" left and right turn indicators and the vehicle 1 further includes "front" left and right turn indicators 3c, 3d, respectively. With this structure, the vehicle first indicator switch 18a is electrically connected with the vehicle left front and rear turn indicators 3a, 3c and the vehicle second indicator switch 18b is electrically connected with the vehicle right front and rear turn indicators 3b, 3d. As such, when the first indicator switch 18a is arranged in the first switch state, both of the left front and rear indicators 3a, 3c are noncoupled with the first flasher relay 12, and thus remain unpowered, and when the switch 18a is in the second switch state, both the left front and rear indicators 3a, 3c is electrically coupled with the first flasher relay 12, and are thus powered. Further, when the second indicator switch 18b is arranged in the first switch state, both of the right front and rear indicators 3b, 3d are noncoupled with the first flasher relay 12 and remain unpowered, and when the switch 18b is in the second switch state, the right front and rear indicators 3b, 3d are both electrically coupled with the first flasher relay 12 and receive electric power. Furthermore, with four turn indicators 3a, 3b, 3c, 3d, the actuator first moveable member 28 is configured to adjust the vehicle first and second indicator switches 18a, 18b, so as to couple or decouple the turn indicators 3a, 3b, 3c, 3d, in the manner described above.

The above-described basic components of the control system 10 are preferably arranged in a vehicle turn indicator circuit 11A and a trailer turn indicator control circuit 11B. Specifically, the four vehicle turn indicators 3a, 3b, 3c, 3d, the vehicle first and second indicator switches 18a, 18b, the vehicle flasher relay 12 and the power source 5 are electrically coupleable to form the vehicle turn indicator circuit 11A. The preferred first activation indicator 22 is electrically connected within the vehicle turn indicator circuit 11A and is configured to provide a first indication (e.g., flashing at a first rate) when electric current in the vehicle circuit 11A is at or greater than a predetermined minimum value and a second indication (e.g., flashing at a second rate) when current in the vehicle circuit 11A is lesser than the predetermined minimum value. Further, the two trailer turn indicators 4a, 4b, the trailer first and second indicator switches 20a, 20b, the trailer flasher relay 14 and the power source 5 are electrically coupleable to form the trailer turn indicator circuit 11B. The preferred second activation indicator 24 is electrically connected within the trailer turn indicator circuit 11B and is configured to provide a first indication (e.g., flashing at a first rate) when electric current in the trailer circuit 11B is at or greater than a predetermined minimum value and a second indication (e.g., flashing at a second rate) when current in the trailer circuit 11B is lesser than the predetermined minimum value. Preferably, each flasher relay 12, 14 is configured to measure current in the associated circuit 11A, 11B, and to appropriately operate the connected activation indicator 22, 24, respectively, as discussed in greater detail below. However, the activation indicators 22, 24 or another circuit component may be configured to measure current within the two indicator circuits 11A, 11B or otherwise determine when the turn indicators are functioning correctly and/or incorrectly, as described below.

Furthermore, the switching device 16 further has first and second electrical nodes 30a, 30b each connected within a separate one of the indicator circuits 11A, 11B, respectively, and configured to interconnect the first and second relays 12, 14, respectively, with the pairs of vehicle indicator switches 18a, 18b and with the trailer indicator switches 20a, 20b, respectively. Specifically, the first node 30a is electrically connected with the vehicle first and second indicator switches 18a, 18b and with the first flasher relay 12. The second node 30b is electrically connected with the trailer first and second indicator switches 20b, 20b and with the second flasher relay 14. Preferably, the first and second flasher relays 12, 14 are each removably connected with the first and second nodes 30a, 30b, respectively, but may each be alternatively fixedly or semi-permanently interconnected.

Having described the basic elements above, these and other components of the turn signal control system 10 are discussed in greater detail below.

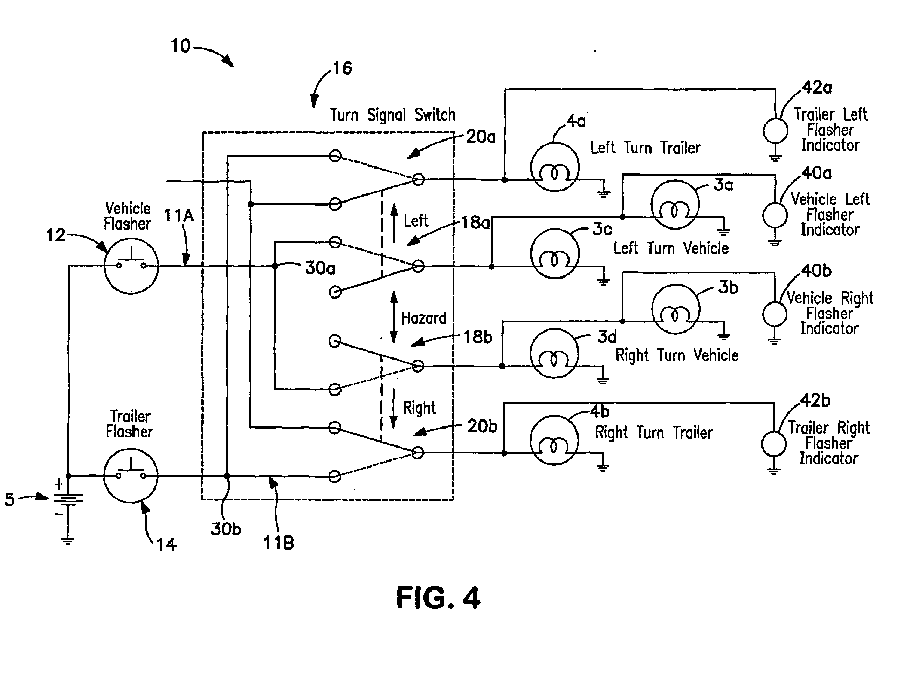

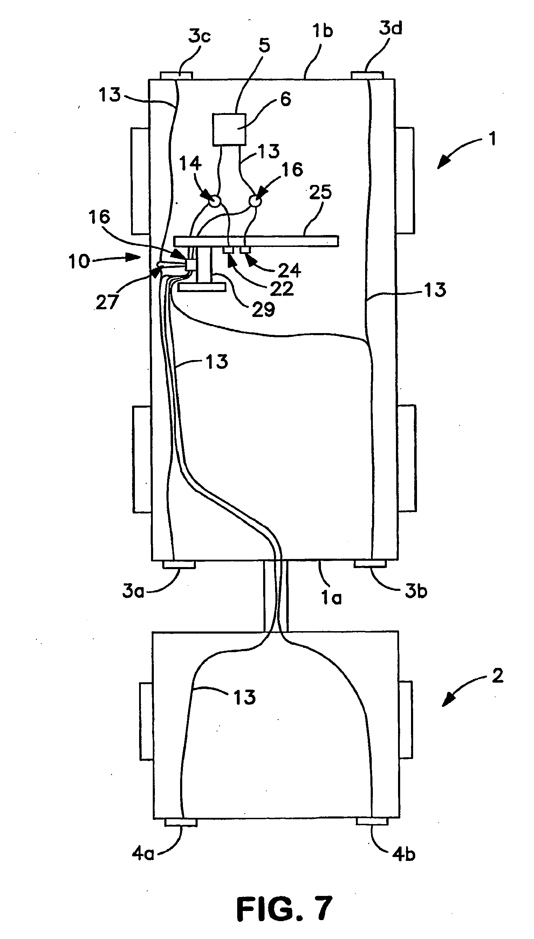

Referring to Figs. 4-7, as discussed above, the turn signal control system 10 basically includes the switching device 16 with two separate switch nodes 30a, 30b each electrically coupling a separate one of the two electrical relays or "flasher" relays 12, 14, respectively, with a separate one of the pair of first and second vehicle indicator switches 18a, 18b and the pair of first and second trailer indicator switches 20a, 20b, respectively. In other words, the first, "vehicle" switch node 30a electrically couples the first, "vehicle" flasher relay 12 with the pair of vehicle indicator switches 18a, 18b and a second, "trailer" switch node 23b electrically couples the second, "trailer" flasher relay 14 with the pair of trailer indicator switches 20a, 20b. Further, at least one and preferably two pairs of vehicle turn indicator devices or "turn signals" 3a, 3b, 3c, 3d are operably connected with the two vehicle indicator switches 18a, 18b (as described below) and at least one and preferably two trailer turn indicators 4a, 4b are operably connected with the two trailer control switches 20a, 20b, respectively. Preferably, the six turn indicators 3a, 3b, 3c, 3d, 4a, 4b are arranged in three right/left pairs on the vehicle 1 and trailer 2; specifically, one turn signal of each pair, e.g., 3a, 3c and 4a, are located at leftward positions on the vehicle 1 and the trailer 2, respectively, and the other turn signal of each pair, e.g., 3b, 3d and 4b, are located at rightward positions on the vehicle 1 and the trailer 2, as best shown in Fig. 7.

Most preferably, the two left vehicle turn signals 3 a, 3c are connected in parallel and operated by the first vehicle indicator switch 18a and the two right vehicle turn signals 3b, 3d are connected in parallel and operated by the second vehicle indicator switch 18b, such that the left signals 3a/3c or the right signals 3b/3d are activated simultaneously, as discussed below. In addition, the first pair of vehicle turn signals 3a, 3b are preferably located at the rear end 1a of the vehicle 1 and the second pair of vehicle turn signals 3c, 3d are located at the front end 1b of the vehicle 1. Although the turn signal control system 10 is used with a vehicle 1 that preferably includes both a pair of rear turn signals 3a, 3b and a pair of front turn signals 3c, 3d, the system 10 may be used with a vehicle 1 that includes only one of the pairs of signals, for example only the pair of rear turn signals 3 a, 3b, or may include only a single vehicle turn signal (neither alternative shown).

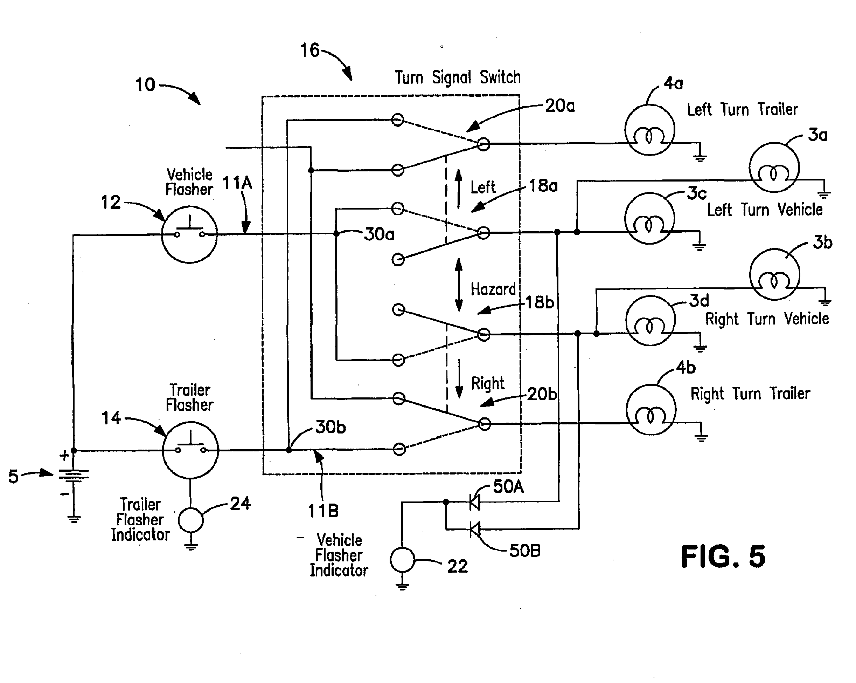

Further, the first flasher relay 12 is preferably electrically coupled with the two pairs of vehicle turn signals 3a, 3b, 3c, 3d through the vehicle indicator switches 18a, 18b and the second flasher relay 14 is electrically coupled with the pair of trailer turn indicators 4a, 4b through the trailer indicator switches 20a, 20b, as discussed above and in further detail below. Each flasher relay 12, 14 is configured to regulate electric current from the power supply 5 such that an intermittent current flows to the associated turn signals 3a, 3b, 3c, 3d and 4a, 4b, respectively, causing the turn signals 3a, 3b, 3c, 3d, 4a, 4b to periodically illuminate or "flash" at a certain rate (e.g., 30 flashes per minute). The vehicle turn signal activation indicator 20 is electrically coupled with the vehicle relay 12 (Fig. 4) and/or with the vehicle turn signals 3a, 3b, 3c, 3d (Fig. 5), and the trailer turn signal activation indicator 22 is electrically coupled with the trailer relay 14 (as shown) and/or with the trailer turn indicators 4a, 4b. Each turn signal activation indicator 22; 24 is located generally proximal to an operator/driver seat (not shown), such as on a control panel or "dashboard" 25 (see Fig. 7), and is configured to provide a first indication when the associated turn signals 3a, 3b, 3c, 3d or 4a, 4b are functioning properly and a second indication when the associated turn signals 3a, 3b, 3c, 3d or 4a, 4b are functioning improperly, as discussed below. Preferably, the activation indicators 20, 22 each include a light-emitting or "light" device, such as a lamp or a light-emitting diode (LED), but may be alternatively include any other device capable of providing at least two different indications to a vehicle operator, such as an LCD, a horn, a speaker, etc.

Additionally, the two pairs of indicator "control" switches 18a, 18b, are each electrically coupled with a separate one of the two flasher relays 12, 14 and with the associated pairs of vehicle turn indicators 3a/3c, 3b/3d or the trailer turn indicators 4a, 4b, respectively, preferably in the following arrangement. A pair of left and right vehicle indicator switches 18a, 18b, respectively, are each coupled with the vehicle relay 12 (i.e., through the vehicle switch node 30a) and with a separate one of the right and left pairs of vehicle turn indicators 3a/3c and 3b/3d, respectively. The vehicle relay 12, the vehicle activation indicator 20, the vehicle switch node 30a, the two vehicle indicator switches 18a, 18b and the four vehicle turn signals 3a, 3b, 3c, 3d are thus electrically interconnected to form the vehicle turn signal circuit 11A, as described above. Further, two trailer indicator switches 20a, 20b are each electrically coupled with the trailer relay 14 (i.e., through the trailer switch node 30b) and with a separate one of the left and right trailer turn indicators 4a, 4b, respectively. The trailer relay 14, the trailer activation indicator 22, the trailer switch node 30b, the two trailer indicator switches 20a, 20b and the two trailer turn indicators 4a, 4b are thus electrically interconnected to form the trailer turn signal circuit 11B, as described above. Further, each control switch 18a, 18b, 20a, and 20b is configured to connect and to alternatively disconnect the associated turn indicators 3a/3c, 3b/3d, 4a and 4b, respectively, with the associated flasher relay 12, 14, to thereby respectively activate and deactivate the turn indicators 3a/3c,3b/3d, 4a, 4b, as discussed in further detail below.

Referring particularly to Fig. 3, as discussed above, the switch actuator 26 is connected with the control switches 18a, 18b, 20a and 20b and is configured to actuate (e.g., "close) the switches 18a, 18b, 20a, 20b so as to selectively activate the turn indicators 3a/3c, 3b/3d, 4a or 4b, respectively, as discussed below. An operator control device 27, such as a pivotable lever, is mounted proximal to the driver's seat (e.g., on the steering wheel column 29, is operatively connected with the actuator 26, and is configured to enable a vehicle operator to operate the actuator 26 and thereby the turn indicators 3a/3c, 3b/3d, 4a and/or 4b, as discussed in further detail below. Furthermore, the power supply 5 is preferably directly electrically connected with each of the relays 12, 14 (e.g., by electric lines 13) so as to provide electrical power to the vehicle relay 12, and thereby to the vehicle turn indicators 3a/3c and/or 3b/3d, and to the trailer relay 14, and thus also to the trailer turn signals 4a and/or 4b.

Preferably, the flasher relays 12, 14 are each further configured to measure the current flow through the particular relay 12 or 14, and thus through the associated turn indicators 3a/3c, 3b/3d and 4a/4b, respectively, and to operate the associated turn signal activation indicator 22, 24 respectively, so as to selectively provide the first indication and to alternatively provide the second indication. Most preferably, each relay 12 and 14 causes the associated turn signal activation indicator 20 and 22 to intermittently illuminate or "flash" at a first rate (e.g., 30 illuminations or "flashes" per minute) when all of the associated turn signals 3a, 3b, 3c, 3d or 4a, 4b, respectively, are functioning properly. Alternatively, the relays 12, 14 each cause the associated turn signal activation indicator 22, 24 to intermittently illuminate or "flash" at a second rate (e.g., 90 flashes per minute), to illuminate continuously, or to not illuminate at all, when any one of the turn signals 3a, 3b, 3c, 3d or 4a, 4b, respectively, are functioning improperly.

With the present turn signal control system 10, the vehicle operator is informed or "warned" when there is a problem (e.g., a "burned-out" bulb or lamp, an unconnected wire, etc.) with one of the vehicle turn signals 3a, 3b, 3c, 3d and/or when there is a problem one of with the trailer turn indicators 4a, 4b, in such a manner that it is clear which particular set of turn signals 3a, 3b, 3c, 3d or 4a, 4b are malfunctioning. The capability of informing the operator as to which set of turn signals, i.e., the vehicle turn signals 3a, 3b, 3c, 3d or the trailer turn indicators 4a, 4b, was not functioning properly was not possible to achieve with certain previously known turn signal control systems, such as that disclosed in Fig. 1.

Preferably, the four control switches 18a, 18b, 20a, 20b are each a double-pole, double-throw or "DPDT" switch that is configured to be "normally open" and arranged such that no current flows through the turn signals 3a/3c, 3b/3d, 4aor 4b (and the flasher relays 12, 14) until the associated control switches 18a, 18b, 20a, 20b are activated or "closed", at which point the relays 12, 14 transmit current intermittently (i.e., in periodic pulses) to the associated turn signals 3a/3c, 3b/3d and 4a, 4b, respectively. Additionally, the switch actuator 26 is preferably configured to simultaneously operate only the two "left" control switches 18a and 20a controlling the three left turn signals 3a, 3c, 4a (i.e., indicating a "left turn"), to simultaneously operate only the two "right" control switches 18b and 20b operating the three right turn signals 3b, 3d, 4b (i.e., indicating a left turn), or to simultaneously operate all four control switches 18a, 20a, 18b and 20b, and thereby all six turn indicators 3a, 3b, 3c, 3d, 4a and 4b (i.e., indicating a hazard condition).

Referring to Figs. 8-10, the switching device 16 preferably includes a housing 33 with first and second housing portions 34a, 34b and each indicator switch 18a, 18b, 20a, 20b is preferably an electromechanical switch that includes and a pair of switch contacts 35a, 35b connected with the first housing portion 34a and a moveable conductor 36. Each moveable conductor 36 is moveably disposed within the second housing portion 34b and is configured to alternatively connect and disconnect the associated pair of switch contacts 35a, 35b. Preferably, the switch actuator 26 further includes a pair of carrier members 37a, 37b each movably disposed within the second housing portion 34b, two switch conductors 36 being mounted on each carrier 37a, 37b, and a pair of operator arms 38a, 38b attached to the lever 27 and configured to displace each carrier 37a, 37b. Specifically, when the lever 27 pivots in first direction d₁ about a lever axis 27a, one operator arm 38a pushes the associated carrier 37a (against biasing of a spring 39), so as to displace two conductors 36 to close the contacts 35a, 35b of the vehicle first indicator switch 18b and the trailer first indicator switch 20a (see Fig. 9). Alternatively, when the lever 27 pivots in a second direction d₂ about the lever axis 27a, the other operator arm 38b pushes the associated carrier 37b to displace two conductors 36 to close the contacts 35a, 35b of the vehicle second indicator switch 18b and the trailer second indicator switch 20b, as shown in Fig. 10. Although the above structures are preferred, the control switches 18a, 18b, 20a, 20b and/or the switch actuator 26 may each be any other appropriate type of device and/or arranged in any other appropriate manner that enables the turn signal control system 10 of the present invention to operate as generally described herein.

Referring to Fig. 4, an alternative construction of the turn signal control system 10 includes a pair of vehicle turn signal activation indicators 40a, 40b each electrically coupled with a separate one of the two pairs of associated vehicle turn signals 3a/3c, 3b/3d, respectively, and a pair of trailer turn signal activation indicators 42A, 42B each electrically coupled directly with a separate one of the trailer turn indicators 4a, 4b, respectively. Specifically, a first vehicle turn signal activation indicator 40a is electrically connected in parallel with one of the left vehicle signals, e.g., the left, rear turn signal 3a (as depicted), and a second vehicle turn signal activation indicator 40b is electrically connected in parallel with one of the right vehicle turn signals, e.g., the right, rear turn signal 3b (as depicted). Further, a first trailer turn signal activation indicator 42A is electrically connected in parallel with the left trailer turn signal 4a and a second trailer turn signal activation indicator 42B is electrically connected in parallel with the right trailer turn signal 4b.

With the alternative construction shown in Fig. 4, the vehicle operator is separately provided with the first indication from the two left activation indicators 40a, 42a whenever the left turn signals 3a, 3c, 4a are activated and functioning properly and alternatively provided with the first indication from the two right activation indicators 40b, 42b when the right turn signals 3b, 3d and 4b are activated and functioning properly. However, if either of the left vehicle turn signals 3a or 3c, either of the right vehicle turn signals 3b or 3d, the left trailer turn signal 4a, and/or the right trailer turn signal 4b is functioning improperly, the associated activation indicator 40a, 40b, 42a, 42b, respectively, will provide the second indication, as discussed above. Thus, the operator is more readily able to identify the specific location of a problem with the turn signals 3a, 3b, 3c, 3d, 4a or 4b.

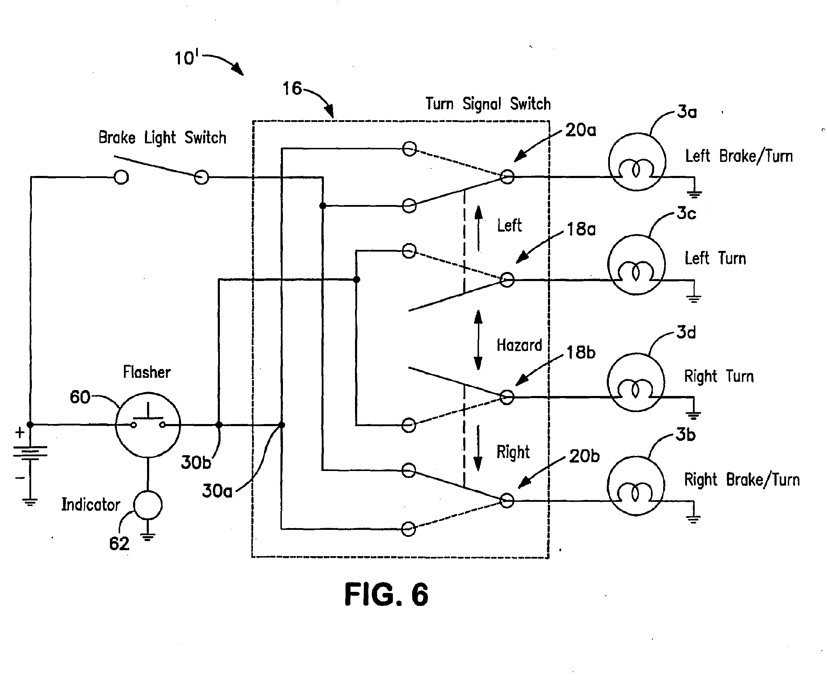

Referring to Fig. 5, another alternative construction of the turn signal control system 10 includes only a single vehicle turn signal activation indicator 22 and a single trailer activation indicator 24, as with the preferred construction shown in Fig. 3. However, in this construction, the associated right and left pairs of vehicle turn indicators 3a/3c and 3b/3d, respectively, are each connected with the vehicle turn signal activation indicator 22 by a separate isolation diode 50A, 50B, respectively. In this manner, when one of the vehicle control switches 18a or 18b is actuated to electrically connect the power source 5 (i.e., through the vehicle flasher 12) with one pair of vehicle turn indicators 3a/3c or 3b/3d, current flows to the vehicle activation indicator 22 through the associated isolation diode 50A, 50B, respectively, to thereby cause the indicator 22 to periodically illuminate as discussed above. However, the other isolation diode 50B, 50A prevents current from flowing back to the other pair of turn indicators 3b/3d, 3a/3c, respectively, so as to prevent an unintentional, simultaneous activation of all four vehicle turn signals 3a, 3b, 3c, and 3d. Otherwise, the turn signal control system 10 depicted in Fig. 6 is constructed and operates in a generally similar manner as the system 10 shown in Fig. 3.

It is apparent that the turn signal control system 10 of the present invention has a number of advantages over previously known systems. The present turn signal control system 10 provides an economical method for detecting signal bulb outages for a vehicle and its drawn trailer. Further, the turn signal control system 10 provides improved bulb count flexibility (flasher units may be chosen independently). In addition, the present turn signal control system 10 allows conversion to a conventional signal flasher unit configuration 10', as depicted in Fig. 6. Specifically, the two switch nodes 11a, 11b may be electrically connected with only a single flasher relay 60 and a single activation indicator 62. As such, the converted turn signal control system 10'only provides the vehicle operator with information as to whether all four of the vehicle turn signals, e.g. 3a, 3b, 3c, 3d (depicted appropriately connected with a separate control switches 18a, 18b, 20a, 20b are functioning properly or whether one or more of the vehicle turn signals are malfunctioning. Thus, the turn signal control system 10' may only provide bulb outage detection for a single lighting circuit, as with previously known systems such as that depicted in Fig. 1. The converted system 10' may also be configured to operate two vehicle turn signals (e.g., rear turn signals 3a, 3b) and two trailer turn indicators 4a, 4b (arrangement not depicted).

It will be appreciated by those skilled in the art that changes could be made to the embodiments or constructions described above without departing from the broad inventive concept thereof. It is understood, therefore, that this invention is not limited to the particular embodiments or constructions disclosed, but it is intended to cover modifications within the scope of the present invention as generally described herein and in the appended claims.

## Claims

1. A turn signal control system (10) for a vehicle (1) and a trailer (2) connected with the vehicle, the vehicle and trailer each having at least one turn indicator (3,4), at least one of the vehicle and the trailer including an electrical power source (5), the turn signal control system comprising:
a first flasher relay (12) adapted to be electrically coupled with the power source;
a second flasher relay (14) adapted to be electrically coupled with the power source; and
a switching device (16),
**characterized in that**
the switching device is configured to electrically couple at least one of the first flasher relay with the at least one vehicle turn indicator (3) and the second flasher relay (14) with the at least one trailer turn indicator (4) and to alternatively decouple at least one of the first flasher relay from the at least one vehicle turn indicator and the second flasher relay from the at least one trailer turn indicator.

2. The turn signal control system as recited in claim 1 further comprising:
a first activation indicator (22) adapted to be electrically coupled with one of the first flasher relay (12) and the at least one vehicle turn indicator (3), the first activation indicator being configured to provide an indication at least one of when electric current through the at least one vehicle turn indicator (3) has a value of at least a predetermined minimum value and when electric current through the at least one vehicle turn indicator (3) is lesser than the predetermined minimum value; and
a second activation indicator (24) adapted to be electrically coupled with one of the second flasher relay (14) and the at least one trailer turn indicator (4), the second activation indicator being configured to provide an indication at least one of when electric current through the at least one trailer turn indicator (4) is at least a predetermined minimum value and when electric current through the at least one trailer turn indicator (4) is lesser than the predetermined minimum value.

3. The turn signal control system as recited in claim 2 wherein the vehicle includes an operator control panel (25) and each one of the first and second activation indicators (22,24) is coupled with the control panel and located so as to provide a vehicle operator with the at least one indication from each of the activation indicators.

4. The turn signal control system as recited in claim 3 wherein each one of the first and second activation indicators (22,24) includes at least one light device adapted to be connected with the control panel (25), each light device being configured to provide the at least one visual indication.

5. The turn signal control system as recited in claim 1 wherein:
the vehicle (1) includes left and right turn indicators (3a, 3b) and the trailer (2) includes left and right turn indicators (4a,4b); and
the switching device (16) is configured to selectively electrically couple the vehicle left turn indicator (3a) with the first flasher relay (12) and the trailer left turn indicator (4a) with the second flasher relay and to alternatively electrically couple the vehicle right turn indicator (3b) with the first flasher relay and the trailer right turn indicator (4b) with the second flasher relay (14).

6. The turn signal control system as recited in claim 1 wherein the switching device (16) includes:
at least one vehicle indicator switch (18) adapted to be electrically connected with the at least one vehicle turn indicator (3), the switch being adjustable ;between a first state in which the at least one vehicle turn indicator is noncoupled with the first flasher relay (12) and a second state in which the at least one vehicle turn indicator (3) is electrically coupled with the first flasher relay (12); and
at least one trailer indicator switch (20) adapted to be electrically connected with the at least one trailer turn indicator (4), the trailer indicator switch being adjustable between a first state in which the at least one trailer turn indicator (4) is noncoupled with the second flasher relay (14) and a second state in which the at least one trailer turn indicator (4) is electrically coupled with the second flasher relay (14).

7. The turn signal control system as recited in claim 1 wherein:
the vehicle (1) includes left and right turn indicators (3a, 3b) and the trailer (2) includes left and right turn indicators (4a,4b);
the switching device (16) includes:
a first vehicle indicator switch (18a) adapted to be electrically connected with the vehicle left turn indicator (3a) and a second vehicle indicator switch (18b) adapted to be electrically connected with the vehicle right turn indicator (3b), each of the first and second vehicle indicator switches being adjustable between a first switch state in which the connected turn indicator is noncoupled with the first flasher relay (12) and a second state in which the connected turn indicator is electrically coupled with the first flasher relay (12);
a first trailer indicator switch (20a) adapted to be electrically connected with the trailer left turn indicator (4a) and a second trailer indicator switch (20b) adapted to be electrically connected with the trailer right turn indicator (4b), each of the first and second trailer switches being adjustable between a first switch state in which the connected turn indicator is noncoupled with the second flasher relay (14) and a second state in which the connected turn indicator is electrically coupled with the second flasher relay (14); and
the turn signal control system (10) further comprises an actuator (26) configured to adjust each one of the vehicle first and second indicator switches (18a,18b) and the trailer first and second indicator switches (20a,20b) between the first and second switch states.

8. The turn signal control system as recited in claim 7 wherein the actuator (26) includes a moveable member (27) operatively engageable with each one of the vehicle and trailer indicator switches (18a,18b,20a,20b) and configured to displace between:
a first position at which each one of the vehicle first and second indicator switches (18a, 18b) and trailer first and second indicator switches (20a,20b) is arranged in the switch first state;
a second position at which the vehicle and trailer first indicator switches (18a, 20a) are each arranged in the second switch state and the vehicle and trailer second indicator switches (18b,20b) are each arranged in the second switch state; and
a third position at which the vehicle and trailer second indicator switches (18b,20b) are each arranged in the first state and the vehicle and trailer first indicator switches (18a,20b) are each arranged in the second switch state.

9. The turn signal control system as recited in claim 8 wherein the actuator (26) further includes a second moveable member configured to adjust all four of the vehicle and trailer first and second indicator switches (18a,18b,20a,20b) to the second switch state.

10. The turn signal control system as recited in claim 7 wherein the switching device (16) further has first and second nodes (30a,30b), the first node (30a) electrically connected with the vehicle first and second indicator switches (18a,18b) and with the first flasher relay (12) and the second node (30b) being electrically connected with the trailer first and second indicator switches (20a,20b) and with the second flasher relay (14).

11. The turn signal control system as recited in claim 10 wherein the first node (30a) is removably connected with the first flasher relay (12) and the second node (30b) is removably connected with the second flasher relay (14).

12. The turn signal control system as recited in claim 7 wherein:
the vehicle left and right turn signal indicators (3a,3b) are rear left and right turn indicators and the vehicle further includes front left and right turn indicators (3c,3d);
the vehicle first indicator switch (18a) is adapted to be electrically coupled with each one of the vehicle left front and rear turn indicators (3a,3b) such that when the vehicle first indicator switch is arranged in the first switch state, both of the vehicle left front and rear indicators are noncoupled with the first flasher relay (12) and when the vehicle first indicator switch is arranged in the second switch state, each one of the vehicle left front and rear indicators is electrically coupled with the first flasher relay (12); and
the vehicle second indicator switch (18b) is adapted to be electrically coupled with each one of the vehicle right front and rear turn indicators (3b,3d) such that when the vehicle second indicator switch is arranged in the first state, both of the vehicle right front and rear indicators are noncoupled with the first flasher relay (12), and when the vehicle second indicator switch is arranged in the second switch state, each of the vehicle right front and rear indicators is electrically coupled with the first flasher relay (12).

13. The turn signal control system as recited in claim 7 wherein the switching device (16) includes at least one of:
a housing configured to contain each one of vehicle first and second indicator switches (18a, 18b), the trailer first and second indicator switches (20a,20b), and a portion of the actuator (2b) engageable with each of the indicator switches; and
a circuit board configured to support each one of vehicle first and second indicator switches (18a, 18b) and the trailer first and second indicator switches (20a,20b).

14. The turn signal control system as recited in claim 7 wherein:
the vehicle left and right turn indicators (3a, 3b), the vehicle first and second indicator switches 18a, 18b), the vehicle flasher relay (12) and the power source (5) are electrically coupleable to form a vehicle turn signal circuit (11A); and
the trailer left and right turn indicators (4a,4b), the trailer first and second indicator switches (20a, 20b), the trailer flasher relay (14) and the power source (5) are electrically coupleable to form a trailer turn signal circuit (11B).

15. The turn signal control system as recited in claim 14 further comprising:
a first activation indicator (22,40) electrically connected within the vehicle turn signal circuit (11A) and configured to provide a first indication when electric current in the vehicle circuit is one of at and greater than a predetermined minimum value and a second indication when electric current in the vehicle circuit lesser than the predetermined minimum value; and
a second activation indicator (24,42) adapted to be electrically connected within the trailer turn signal circuit (11B) and configured to provide a first indication when electric current in the trailer circuit is one of at and greater than a predetermined minimum value and a second indication when electric current in the trailer circuit lesser than the predetermined minimum value.

16. The turn signal control system as recited in claim 7 wherein each one of the vehicle first and second indicator switches (18a,18b) and the trailer first and second indicator switches (20a,20b) is a normally open, double-pole, double-throw switch.

17. The turn signal control system as recited in claim 1 wherein each of the vehicle turn indicators (3) and the trailer turn indicators (4) includes at least one lamp with at least one bulb.

18. The turn signal control system as recited in claim 1 wherein the first flasher relay (12) , the second flasher relay (14), and the switching device (16) are each adapted to be generally disposed on the vehicle.

19. The turn signal control system as recited in claim 1, wherein the vehicle (1) and trailer (2) each have left and right turn indicators (3a,3b,4a,4b)
and
the switching device (16) includes:
a first vehicle indicator switch (18a) adapted to be electrically connected with the vehicle left turn indicator (3a) and a second vehicle indicator switch (18b) adapted to be electrically connected with the vehicle right turn indicator (3b), each of the first and second vehicle indicator switches being adjustable between a first switch state in which the connected turn indicator is noncoupled with the first flasher relay (12) and a second state in which the connected turn indicator is electrically coupled with the first flasher relay (12); and
a first trailer indicator switch (20a) adapted to be electrically connected with the trailer left turn indicator (4a) and a second trailer indicator switch (20b) adapted to be electrically connected with the trailer right t turn indicator (4b), each of the first and second trailer switches being adjustable between a first switch state in which the connected turn indicator is noncoupled with the second flasher relay (14) and a second state in which the connected turn indicator is electrically coupled with the second flasher relay (14) further comprising
an actuator (2b) configured to adjust each one of the vehicle first and second indicator switches (18a,18b) and the trailer first and second indicator switches (20a,20b) between the first and second switch states.

## Patentansprüche

1. Fahrtrichtungsanzeigesteuerungssystem (10) für ein Fahrzeug (1) und einen Anhänger (2), der mit dem Fahrzeug verbunden ist, wobei das Fahrzeug und der Anhänger jeweils mindestens einen Fahrtrichtungsanzeiger (3, 4) aufweisen, wobei mindestens das Fahrzeug oder der Anhänger eine elektrische Leistungsquelle (5) aufweist, mit:
einem ersten Blinkrelais (12), das dazu angepasst ist, elektrisch mit der Leistungsquelle verbunden zu werden;
einem zweiten Blinkrelais (14), das dazu angepasst ist, elektrisch mit der Leistungsquelle verbunden zu werden; und
einer Schaltvorrichtung (16),
**dadurch gekennzeichnet, dass**
die Schaltvorrichtung zum elektrischen Verbinden mindestens des ersten Blinkrelais mit dem mindestens einen Fahrzeugfahrtrichtungsanzeiger (3) oder des zweiten Blinkrelais (14) mit dem mindestens einen Anhängerfahrtrichtungsanzeiger (4) und alternativ zum Trennen mindestens des ersten Blinkrelais von dem mindestens einen Fahrzeugfahrtrichtungsanzeiger oder des zweiten Blinkrelais von dem mindestens einen Anhängerfahrtrichtungsanzeiger ausgebildet ist.

2. Fahrtrichtungsanzeigesteuerungssystem nach Anspruch 1, ferner mit:
einem ersten Aktivierungsanzeiger (22), der dazu angepasst ist, elektrisch mit mindestens dem ersten Blinkrelais (12) oder dem mindestens einen Fahrzeugfahrtrichtungsanzeiger (3) verbunden zu werden, wobei der erste Aktivierungsanzeiger zum Liefern einer Anzeige mindestens dann,
wenn ein elektrischer Strom durch den mindestens einen Fahrzeugfahrtrichtungsanzeiger (3) mindestens einen Wert eines vorbestimmten Minimalwerts hat oder wenn ein elektrischer Strom durch den mindestens einen Fahrzeugfahrtrichtungsanzeiger (3) kleiner als der vorbestimmte Minimalwert ist, ausgebildet ist; und
einem zweiten Aktivierungsanzeiger (24), der dazu angepasst ist, elektrisch mit mindestens dem zweiten Blinkrelais (14) oder dem mindestens einen Anhängerfahrtrichtungsanzeiger (4) verbunden zu werden, wobei der zweite Aktivierungsanzeiger zum Liefern einer Anzeige mindestens dann, wenn ein elektrischer Strom durch den mindestens einen Anhängerfahrtrichtungsanzeiger (4) mindestens ein vorbestimmter Minimalwert ist oder wenn ein elektrischer Strom durch den mindestens einen Anhängerfahrtrichtungsanzeiger (4) kleiner als der vorbestimmte Minimalwert ist, ausgebildet ist.

3. Fahrtrichtungsanzeigesteuerungssystem nach Anspruch 2, bei dem das Fahrzeug eine Bedienersteuerungskonsole (25) aufweist und der erste und der zweite Aktivierungsanzeiger (22, 24) jeweils mit der Steuerungskonsole verbunden und zum Bereitstellen der mindestens einen Anzeige jedes der Aktivierungsanzeiger für einen Fahrzeugbediener angeordnet ist.

4. Fahrtrichtungsanzeigesteuerungssystem nach Anspruch 3, bei dem der erste und der zweite Aktivierungsanzeiger (22, 24) jeweils mindestens eine Beleuchtungsvorrichtung aufweisen, die dazu angepasst ist, mit der Steuerkonsole (25) verbunden zu werden, wobei jede Beleuchtungsvorrichtung zum Bereitstellen der mindestens einen visuellen Anzeige ausgebildet ist.

5. Fahrtrichtungsanzeigesteuerungssystem nach Anspruch 1, bei dem:
das Fahrzeug (1) einen linken und einen rechten Fahrtrichtungsanzeiger (3a, 3b) aufweist und
der Anhänger (2) einen linken und einen rechten Fahrtrichtungsanzeiger (4a, 4b) aufweist; und
die Schaltvorrichtung (16) zum selektiven elektrischen Verbinden des linken Fahrzeugfahrtrichtungsanzeigers (3a) mit dem ersten Blinkrelais (12) und des linken Anhängerfahrtrichtungsanzeigers (4a) mit dem zweiten Blinkrelais und alternativ zum elektrischen Verbinden des rechten Fahrzeugfahrtrichtungsanzeigers (3b) mit dem ersten Blinkrelais und des rechten Anhängerfahrtrichtungsanzeigers (4b) mit dem zweiten Blinkrelais (14) ausgebildet ist.

6. Fahrtrichtungsanzeigesteuerungssystem nach Anspruch 1, bei dem die Schaltvorrichtung (16) aufweist:
mindestens einen Fahrzeuganzeigerschalter (18), der dazu angepasst ist, elektrisch mit dem mindestens einen Fahrzeugfahrtrichtungsanzeiger (3) verbunden zu werden, wobei der Schalter zwischen einem ersten Zustand, in dem der mindestens eine Fahrzeugfahrtrichtungsanzeiger nicht mit dem ersten Blinkrelais (12) verbunden ist, und einem zweiten Zustand, in dem der mindestens eine Fahrzeugfahrtrichtungsanzeiger (3) elektrisch mit dem ersten Blinkrelais (12) verbunden ist, einstellbar ist; und
mindestens einen Anhängeranzeigerschalter (20), der dazu angepasst ist, elektrisch mit dem mindestens einen Anhängerfahrtrichtungsanzeiger (4) verbunden zu werden, wobei der Anhängeranzeigerschalter zwischen einem ersten Zustand, in dem der mindestens eine Anhängerfahrtrichtungsanzeiger (4) nicht mit dem zweiten Blinkrelais (14) verbunden ist, und einem zweiten Zustand, in dem der mindestens eine Anhängerfahrtrichtungsanzeiger (4) elektrisch mit dem zweiten Blinkrelais (14) verbunden ist, einstellbar ist.

7. Fahrtrichtungsanzeigesteuerungssystem nach Anspruch 1, bei dem:
das Fahrzeug (1) einen linken und einen rechten Fahrtrichtungsanzeiger (3a, 3b) aufweist und
der Anhänger (2) einen linken und einen rechten Fahrtrichtungsanzeiger (4a, 4b) aufweist;
die Schaltvorrichtung (16) aufweist:
einen ersten Fahrzeuganzeigerschalter (18a), der dazu angepasst ist, elektrisch mit dem linken Fahrzeugfahrtrichtungsanzeiger (3a) verbunden zu werden, und einen zweiten Fahrzeuganzeigerschalter (18b), der dazu angepasst ist, elektrisch mit dem rechten Fahrzeugfahrtrichtungsanzeiger (3b) verbunden zu werden, wobei der erste und der zweite Fahrzeuganzeigerschalter jeweils zwischen einem ersten Schaltzustand, in dem der verbundene Fahrtrichtungsanzeiger nicht mit dem ersten Blinkrelais (12) verbunden ist, und einem zweiten Zustand, in dem der verbundene Fahrtrichtungsanzeiger elektrisch mit dem ersten Blinkrelais (12) verbunden ist, einstellbar sind;
einen ersten Anhängeranzeigerschalter (20a), der dazu angepasst ist, elektrisch mit dem linken Anhängerfahrtrichtungsanzeiger (4a) verbunden zu werden, und einen zweiten Anhängeranzeigerschalter (20b), der dazu angepasst ist, elektrisch mit dem rechten Anhängerfahrtrichtungsanzeiger (4b) verbunden zu werden, wobei der erste und der zweite Anhängerschalter jeweils zwischen einem ersten Schaltzustand, in dem der verbundene Fahrtrichtungsanzeiger nicht mit dem zweiten Blinkrelais (14) verbunden ist, und einem zweiten Zustand, in dem der verbundene Fahrtrichtungsanzeiger elektrisch mit dem zweiten Blinkrelais (14) verbunden ist, einstellbar sind; und
das Fahrtrichtungsanzeigesteuerungssystem (10) ferner einen Aktor (26) aufweist, der zum Einstellen jeweils des ersten Fahrzeuganzeigerschalters und des zweiten Fahrzeuganzeigerschalters (18a, 18b) und des ersten Anhängeranzeigerschalters und des zweiten Anhängeranzeigerschalters (20a, 20b) zwischen dem ersten und dem zweiten Schaltzustand ausgebildet ist.

8. Fahrtrichtungsanzeigesteuerungssystem nach Anspruch 7, bei dem der Aktor (26) ein bewegbares Bauteil (27) aufweist, das für einen Betrieb mit jeweils den Fahrzeuganzeigerschaltem und den Anhängeranzeigerschaltern (18a, 18b, 20a, 20b) in Eingriff bringbar ist und ausgebildet ist zum Verschieben zwischen:
einer ersten Position, an der der erste Fahrzeuganzeigerschalter und der zweite Fahrzeuganzeigerschalter (18a, 18b) und der erste Anhängeranzeigerschalter und der zweite Anhängeranzeigerschalter (20a, 20b) jeweils in dem ersten Schaltzustand angeordnet sind;
einer zweiten Position, an der der erste Fahrzeuganzeigerschalter und der erste Anhängeranzeigerschalter (18a, 20a) jeweils in dem zweiten Schaltzustand angeordnet sind und der zweite Fahrzeuganzeigerschalter und der zweite Anhängeranzeigerschalter (18b, 20b) jeweils in dem zweiten Schaltzustand angeordnet sind; und
einer dritten Position, an der der zweite Fahrzeuganzeigerschalter und der zweite Anhängeranzeigerschalter (18b, 20b) jeweils in dem ersten Zustand angeordnet sind und der erste Fahrzeuganzeigerschalter und der erste Anhängeranzeigerschalter (18a, 20a) jeweils in dem zweiten Schaltzustand angeordnet sind.

9. Fahrtrichtungsanzeigesteuerungssystem nach Anspruch 8, bei dem der Aktor (26) ein zweites bewegbares Bauteil aufweist, das zum Einstellen aller vier des ersten Fahrzeuganzeigerschalters, des zweiten Fahrzeuganzeigerschalters, des ersten Anhängeranzeigerschalters und des zweiten Anhängeranzeigerschalters (18a, 18b, 20a, 20b) auf den zweiten Schaltzustand ausgebildet ist.

10. Fahrtrichtungsanzeigesteuerungssystem nach Anspruch 7, bei dem die Schaltvorrichtung (16) ferner einen ersten und einen zweiten Knoten (30a, 30b) aufweist, wobei der erste Knoten (30b) elektrisch mit dem ersten Fahrzeuganzeigerschalter und dem zweiten Fahrzeuganzeigerschalter (18a, 18b) und mit dem ersten Blinkrelais (12) verbunden ist und der zweite Knoten (30b) elektrisch mit dem ersten Anhängeranzeigerschalter und dem zweiten Anhängeranzeigerschalter (20a, 20b) und mit dem zweiten Blinkrelais (14) verbunden ist.

11. Fahrtrichtungsanzeigesteuerungssystem nach Anspruch 10, bei dem der erste Knoten (30a) trennbar mit dem ersten Blinkrelais (12) verbunden ist und der zweite Knoten (30b) trennbar mit dem zweiten Blinkrelais (14) verbunden ist.

12. Fahrtrichtungsanzeigesteuerungssystem nach Anspruch 7, bei dem:
der linke Fahrzeugfahrtrichtungsanzeiger und der rechte Fahrzeugfahrtrichtungsanzeiger (3a, 3b) ein hinterer linker Fahrtrichtungsanzeiger und ein hinterer rechter Fahrtrichtungsanzeiger sind und das Fahrzeug ferner einen vorderen linken Fahrtrichtungsanzeiger und einen vorderen rechten Fahrtrichtungsanzeiger (3c, 3d) aufweist;
der erste Fahrzeuganzeigerschalter (18a) dazu angepasst ist, elektrisch mit jeweils dem linken vorderen Fahrzeugfahrtrichtungsanzeiger und dem linken hinteren Fahrzeugfahrtrichtungsanzeiger (3a, 3c) verbunden zu werden, derart, dass, wenn der erste Fahrzeuganzeigerschalter in dem ersten Schaltzustand angeordnet ist, sowohl der linke vordere Fahrzeuganzeiger als auch der linke hintere Fahrzeuganzeiger nicht mit dem ersten Blinkrelais (12) verbunden sind, und wenn der erste Fahrzeuganzeigerschalter in dem zweiten Schaltzustand angeordnet ist, der linke vordere Fahrzeuganzeiger und der linke hintere Fahrzeuganzeiger jeweils elektrisch mit dem ersten Blinkrelais (12) verbunden sind;
der zweite Fahrzeuganzeigerschalter (18b) dazu angepasst ist, elektrisch mit jeweils dem rechten vorderen Fahrzeugfahrtrichtungsanzeiger und dem rechten hinteren Fahrzeugfahrtrichtungsanzeiger (3b, 3d) verbunden zu werden, derart, dass, wenn der zweite Fahrzeuganzeigerschalter in dem ersten Zustand angeordnet ist, sowohl der rechte vordere Fahrzeuganzeiger als auch der rechte hintere Fahrzeuganzeiger nicht mit dem ersten Blinkrelais (12) verbunden sind, und wenn der zweite Fahrzeuganzeiger in dem zweiten Schaltzustand angeordnet ist, der rechte vordere Fahrzeuganzeiger und der rechte hintere Fahrzeuganzeiger jeweils elektrisch mit dem ersten Blinkrelais (12) verbunden sind.

13. Fahrtrichtungsanzeigesteuerungssystem nach Anspruch 7, bei dem die Schaltvorrichtung (16) mindestens aufweist:
ein Gehäuse, das zum Enthalten jeweils des ersten Fahrzeuganzeigerschalters und des zweiten Fahrzeuganzeigerschalters (18a, 18b) und des ersten Anhängeranzeigerschalters und des zweiten Anhängeranzeigerschalters (20a, 20b) und eines Teils des Aktors (26), der jeweils mit den Anzeigerschaltem in Eingriff bringbar ist, ausgebildet ist; oder
eine Schaltplatte, die zum Tragen jeweils des ersten Fahrzeuganzeigerschalters und des zweiten Fahrzeuganzeigerschalters (18a, 18b) und des ersten Anhängeranzeigerschalters und des zweiten Anhängeranzeigerschalters (20a, 20b) ausgebildet ist.

14. Fahrtrichtungsanzeigesteuerungssystem nach Anspruch 7, bei dem:
der linke Fahrzeugfahrtrichtungsanzeiger und der rechte Fahrzeugfahrtrichtungsanzeiger (3a, 3b), der erste Fahrzeuganzeigerschalter und der zweite Fahrzeuganzeigerschalter (18a, 18b), das Fahrzeugblinkrelais (12) und die Leistungsquelle (5) zum Ausbilden einer Fahrzeugfahrtrichtungsanzeigeschaltung (11A) elektrisch verbindbar sind; und
der linke Anhängerfahrtrichtungsanzeiger und der rechte Anhängerfahrtrichtungsanzeiger (4a, 4b), der erste Anhängeranzeigerschalter und der zweite Anhängeranzeigerschalter (20a, 20b), das Anhängerblinkrelais (14) und die Leistungsquelle (5) zum Ausbilden einer Anhängerfahrtrichtungsanzeigeschaltung (11B) elektrisch verbindbar sind.

15. Fahrrichtungsanzeigesteuerungssystem nach Anspruch 14, ferner mit:
einem ersten Aktivierungsanzeiger (22; 40), der dazu angepasst ist, elektrisch innerhalb der Fahrzeugfahrtrichtungsanzeigeschaltung (11A) verbunden zu werden, und zum Liefern einer ersten Anzeige, wenn ein elektrischer Strom in der Fahrzeugschaltung mindestens größer gleich einem vorbestimmten Minimalwert ist, und einer zweiten Anzeige, wenn ein elektrischer Strom in der Fahrzeugschaltung kleiner als der vorbestimmte Minimalwert ist, ausgebildet ist; und
einen zweiten Aktivierungsanzeiger (24; 42), der dazu angepasst ist, elektrisch innerhalb der Anhängerfahrtrichtungsanzeigeschaltung (11B) verbunden zu werden, und zum Liefern einer ersten Anzeige, wenn ein elektrischer Strom in der Anhängerschaltung mindestens größer gleich einem vorbestimmten Minimalwert ist, und einer zweiten Anzeige, wenn ein elektrischer Strom in der Anhängeschaltung kleiner als der vorbestimmte Minimalwert ist, ausgebildet ist.

16. Fahrtrichtungsanzeigesteuerungssystem nach Anspruch 7, bei dem der erste Fahrzeuganzeigerschalter und der zweite Fahrzeuganzeigerschalter (18a, 18b) und der erste Anhängeranzeigerschalter und der zweite Anhängeranzeigerschalter (20a, 20b) jeweils ein normal offener zweipoliger Umschalter sind.

17. Fahrtrichtungsanzeigesteuerungssystem nach Anspruch 1, bei dem die Fahrzeugfahrtrichtungsanzeiger (3) und die Anhängerfahrtrichtungsanzeiger (4) jeweils mindestens eine Lampe mit mindestens einer Birne aufweisen.

18. Fahrtrichtungsanzeigesteuerungssystem nach Anspruch 1, bei dem das erste Blinkrelais (12), das zweite Blinkrelais (14) und die Schaltvorrichtung (16) jeweils dazu angepasst sind, allgemein auf dem Fahrzeug angeordnet zu sein.

19. Fahrtrichtungsanzeigesteuerungssystem nach Anspruch 1, bei dem das Fahrzeug (1) und der Anhänger (2) jeweils linke und rechte Fahrtrichtungsanzeiger (3a, 3b, 4a, 4b) aufweisen und die Schaltvorrichtung (16) aufweist:
einen ersten Fahrzeuganzeigerschalter (18a), der dazu angepasst ist, elektrisch mit dem linken Fahrzeugfahrtrichtungsanzeiger (3a) verbunden zu werden, und einen zweiten Fahrzeuganzeigerschalter (18b), der dazu angepasst ist, elektrisch mit dem rechten Fahrzeugfahrtrichtungsanzeiger (3b) verbunden zu werden, wobei der erste Fahrzeuganzeigerschalter und der zweite Fahrzeuganzeigerschalter jeweils zwischen einem ersten Schaltzustand, in dem der verbundene Fahrtrichtungsanzeiger nicht mit dem ersten Blinkrelais (12) verbunden ist, und einem zweiten Zustand, in dem der verbundene Fahrtrichtungsanzeiger elektrisch mit dem ersten Blinkrelais (12) verbunden ist, einstellbar sind; und
einen ersten Anhängeranzeigerschalter (20a), der dazu angepasst ist, elektrisch mit dem linken Anhängerfahrtrichtungsanzeiger (4a) verbunden zu werden, und einen zweiten Anhängeranzeigerschalter (20b), der dazu angepasst ist, elektrisch mit dem rechten Anhängerfahrtrichtungsanzeiger (4b) verbunden zu werden, wobei der erste Anhängerschalter und der zweite Anhängerschalter jeweils zwischen einem ersten Schaltzustand, in dem der verbundene Fahrtrichtungsanzeiger nicht mit dem zweiten Blinkrelais (14) verbunden ist, und einem zweiten Zustand, in dem der verbundene Fahrtrichtungsanzeiger elektrisch mit dem zweiten Blinkrelais (14) verbunden ist, einstellbar sind, ferner mit
einem Aktor (26), der zum Einstellen jeweils des ersten Fahrzeuganzeigerschalters und des zweiten Fahrzeuganzeigerschalters (18a, 18b) und des ersten Anhängeranzeigerschalters und des zweiten Anhängeranzeigerschalters (20a, 20b) zwischen dem ersten Schaltzustand und dem zweiten Schaltzustand ausgebildet ist.

## Revendications

1. Système de commande de signal de virage (10) pour un véhicule (1) et une remorque (2) connectée au véhicule, le véhicule et la remorque ayant chacun au moins un indicateur de virage (3, 4), au moins l'un du véhicule et de la remorque comportant une source d'énergie électrique (5), le système de commande de signal de virage comprenant:
un premier relais de clignotant (12) adapté pour être
électriquement couplé à la source d'énergie ;
un second relais de clignotant (14) adapté pour être
électriquement couplé à la source d'énergie ; et un dispositif de commutation (16), **caractérisé en ce**
**que** le dispositif de commutation est configuré pour coupler électriquement au moins l'un du premier relais de clignotant (12) au au moins un indicateur de virage (3) du véhicule et du second relais de clignotant (14) au au moins un indicateur de virage (4) de la remorque et pour désaccoupler autrement au moins l'un du premier relais de clignotant du au moins un indicateur de virage du véhicule et du second relais de clignotant du au moins un indicateur de virage de la remorque.

2. Système de commande de signal de virage selon la
revendication 1, comprenant en outre:
un premier indicateur d'activation (22) adapté pour
être électriquement couplé à l'un du premier relais de clignotant (12) et du au moins un indicateur de virage (3) du véhicule, le premier indicateur d'activation étant configuré pour fournir une indication d'au moins le moment où le courant électrique passant à travers le au moins un indicateur de virage (3) du véhicule a au moins une valeur minimale prédéterminée et le moment où le courant électrique passant à travers le au moins un indicateur de virage (3) du véhicule est inférieur à la valeur minimale prédéterminée; et un second indicateur d'activation (24) adapté pour
être électriquement couplé à l'un du second relais de clignotant (14) et du au moins un indicateur de virage (4) de la remorque, le second indicateur d'activation étant configuré pour fournir une indication d'au moins le moment où le courant électrique passant à travers le au moins un indicateur de virage (4) de la remorque a au moins une valeur minimale prédéterminée et le moment où le courant électrique passant à travers le au moins un indicateur de virage (4) de la remorque est inférieur à la valeur minimale prédéterminée.

3. Système de commande de signal de virage selon la revendication 2, dans lequel le véhicule comprend un panneau de commande opérateur (25) et chacun des premier et second indicateurs d'activation (22, 24) est couplé au panneau de commande et situé de manière à fournir à un opérateur du véhicule la au moins une indication provenant de chacun des indicateurs d'activation.

4. Système de commande de signal de virage selon la revendication 3, dans lequel chacun des premier et second indicateurs d'activation (22, 26) comprend au moins un dispositif lumineux adapté pour être connecté au panneau de commande (25), chaque dispositif lumineux étant configuré pour fournir la au moins une indication visuelle.

5. Système de commande de signal de virage selon la
revendication 1, dans lequel :
le véhicule (1) comprend des indicateurs de virage
gauche et droit (3a, 3b) et la remorque comprend des indicateurs de virages gauche et droit (4a, 4b); et
le dispositif de commutation (16) est configuré pour
coupler électriquement sélectivement l'indicateur de virage gauche (3a) du véhicule au premier relais de clignotant (12) et l'indicateur de virage gauche (4a) de la remorque au second relais de clignotant et coupler électriquement autrement l'indicateur de virage droit (3b) du véhicule au premier relais de clignotant et l'indicateur de virage droit (4b) de la remorque au second relais de clignotant (14).

6. Système de commande de signal de virage selon la revendication 1, dans lequel le dispositif de commutation (1b) comprend:
au moins un commutateur d'indicateur (18) du véhicule
adapté pour être électriquement connecté au au moins un indicateur de virage (3) du véhicule, le commutateur étant ajustable entre un premier état, dans lequel le au moins un indicateur de virage du véhicule n'est pas couplé au premier relais de clignotant (12) et un second état, dans lequel le au moins un indicateur de virage (3) du véhicule est électriquement couplé au premier relais de clignotant (12); et
au moins un commutateur d'indicateur (20) de la
remorque adapté pour être électriquement connecté au au moins un indicateur de virage (4) de la remorque, le commutateur d'indicateur de la remorque étant ajustable entre un premier état, dans lequel le au moins un indicateur de virage (4) de la remorque n'est pas couplé au second relais de clignotant (14) et un second état, dans lequel le au moins un indicateur de virage (4) de la remorque est électriquement couplé au second relais de clignotant (14).

7. Système de commande de signal de virage selon la
revendication 1, dans lequel:
le véhicule (1) comprend des indicateurs de virage
gauche et droit (3a, 3b) et la remorque (2) des indicateurs de virage gauche et droit (4a, 4b);
le dispositif de commutation (16) comprend:
un premier commutateur d'indicateur (18a) du véhicule
adapté pour être électriquement connecté à l'indicateur de virage gauche (3a) du véhicule et un second commutateur d'indicateur (18b) du véhicule adapté pour être électriquement connecté à l'indicateur de virage droit (3b) du véhicule, chacun des premier et second commutateurs d'indicateurs de véhicule étant ajustable entre un premier état de commutation, dans lequel l'indicateur de virage connecté n'est pas couplé au premier relais de clignotant (12) et un second état, dans lequel l'indicateur de virage connecté est électriquement couplé au premier relais de clignotant (12); un premier commutateur d'indicateur (20a) de la remorque adapté pour être électriquement connecté à l'indicateur de virage gauche (4a) de la remorque et un second commutateur d'indicateur (20b) de la remorque adapté pour être électriquement connecté à l'indicateur de virage droit (4b) de la remorque, chacun des premier et second commutateurs de la remorque étant ajustable entre un premier état de commutation, dans lequel l'indicateur de virage connecté n'est pas couplé au second relais de clignotant (14) et un second état, dans lequel l'indicateur de virage connecté est électriquement couplé au second relais de clignotant (14) ; et
le système de commande de signal de virage (10)
comprend en outre un dispositif d'actionnement (26) configuré pour ajuster chacun des premier et second commutateurs d'indicateurs (18a, 18b) du véhicule et des premier et second commutateurs d'indicateurs (20a, 20b) de la remorque entre les premier et second états de commutation.

8. Système de commande de signal de virage selon la revendication 7, dans lequel le dispositif d'actionnement (26) comprend un élément mobile (27) qui peut s'engager en service sur chacun des commutateurs d'indicateurs (18a, 18b, 20a, 20b) du véhicule et de la remorque et est configuré pour se déplacer entre:
une première position, dans laquelle chacun des premier et second commutateurs d'indicateurs (18a, 18b) du véhicule et des premier et second commutateurs d'indicateurs (20a, 20b) de la remorque est aménagé dans le premier état de commutation;
une deuxième position, dans laquelle les premier et second commutateurs d'indicateurs (18a, 20a) du véhicule et de la remorque sont chacun aménagés dans le deuxième état de commutation et les seconds commutateurs d'indicateurs (18b, 20b) du véhicule et de la remorque sont chacun aménagés dans le deuxième état de commutation; et
une troisième position, dans laquelle les seconds commutateurs d'indicateurs (18b, 20b) du véhicule et de la remorque sont chacun aménagés dans le premier état et les premiers commutateurs d'indicateurs (18a, 20a) du véhicule et de la remorque sont chacun aménagés dans le deuxième état de commutation.

9. Système de commande de signal de virage selon la revendication 8, dans lequel le dispositif d'actionnement (26) comprend en outre un second élément mobile configuré pour ajuster l'ensemble des quatre premiers et seconds commutateurs d'indicateurs (18a, 18b, 20a, 20b) du véhicule et de la remorque au deuxième état de commutation.

10. Système de commande de signal de virage selon la revendication 7, dans lequel le dispositif de commutation (16) a en outre un premier et un second noeud (30a, 30b), le premier noeud (30a) étant électriquement connecté au premier et au second commutateurs d'indicateurs (18a, 18b) du véhicule et au premier relais de clignotant (12) et le second noeud (30b) étant électriquement connecté au premier et au second commutateurs d'indicateurs (20a, 20b) de la remorque et au second relais de clignotant (14).

11. Système de commande de signal de virage selon la revendication 10, dans lequel le premier noeud (30a) est connecté de manière amovible au premier relais de clignotant (12) et le second noeud (30b) est connecté de manière amovible au second relais de clignotant (14).

12. Système de commande de signal de virage selon la revendication 7, dans lequel :
les indicateurs de signal de virage gauche et droit (3a, 3b) du véhicule sont des indicateurs de virage gauche et droit arrière et le véhicule comprend en outre des indicateurs de virage gauche et droit avant (3c, 3d);
le premier commutateur d'indicateur (18a) du véhicule est adapté pour être couplé à chacun des indicateurs de virage avant et arrière gauche (3a, 3c) du véhicule de sorte que, lorsque le premier commutateur d'indicateur du véhicule est aménagé dans le premier état de commutation, les deux indicateurs avant et arrière gauche du véhicule ne soient pas couplés au premier relais de clignotant (12) et que, lorsque le premier commutateur d'indicateur du véhicule est aménagé dans le second état de commutation, chacun des indicateurs avant et arrière gauche du véhicule soit électriquement couplé au premier relais de clignotant (12); et
le second commutateur d'indicateur (18b) du véhicule est adapté pour être électriquement couplé à chacun des indicateurs de virages avant et arrière droit (3b, 3d) de sorte que, lorsque le second commutateur d'indicateur du véhicule est aménagé dans le premier état de commutation, les deux indicateurs avant et arrière droit du véhicule ne soient pas couplés au premier relais de clignotant (12) et que, lorsque le second commutateur d'indicateur du véhicule est aménagé dans le second état de commutation, chacun des indicateurs avant et arrière droit du véhicule soit électriquement couplé au premier relais de clignotant (12).

13. Système de commande de signal de virage selon la revendication 7, dans lequel le dispositif de commutation (16) comprend au moins l'un des éléments suivants:
un boîtier configuré pour contenir chacun des premier
et second commutateurs d'indicateurs (18a, 18b) du véhicule, les premier et second commutateurs d'indicateurs (20a, 20b) de la remorque et une partie du dispositif d'actionnement (26) qui peut s'engager sur chacun des commutateurs d'indicateurs; et
une carte de circuit configurée pour supporter chacun
des premier et second commutateurs d'indicateurs (18a, 18b) du véhicule et des premier et second commutateurs d'indicateurs (20a, 20b) de la remorque.

14. Système de commande de signal de virage selon la
revendication 7, dans lequel :
les indicateurs de virage gauche et droit (3a, 3b) du
véhicule, les premier et second commutateurs d'indicateurs (18a, 18b) du véhicule, le relais de clignotant (12) du véhicule et la source d'énergie (5) peuvent être électriquement couplés pour former un circuit de signal de virage
(11A) du véhicule; et
les indicateurs de virage gauche et droit (4a, 4b) de
la remorque, les premier et second commutateurs d'indicateurs (20a, 20b) de la remorque, le relais de clignotant (14) de la remorque et la source d'énergie (5) peuvent être électriquement couplés pour former un circuit de signal de virage (11B) de la remorque.

15. Système de commande de signal de virage selon la
revendication 14, comprenant en outre:
un premier indicateur d'activation (22; 40) adapté
pour être électriquement connecté dans le circuit de signal de virage (11A) du véhicule et configuré pour fournir une première indication du moment où le courant électrique passant dans le circuit du véhicule est égal ou supérieur à une valeur minimale prédéterminée et une seconde indication du moment où le courant électrique passant dans le circuit du véhicule est inférieur à la valeur minimale prédéterminée; et
un second indicateur d'activation (24; 42) adapté
pour être électriquement connecté dans le circuit de signal de virage (11B) de la remorque et configuré pour fournir une première indication du moment où le courant électrique passant dans le circuit de la remorque est égal ou supérieur à une valeur minimale prédéterminée et une seconde indication du moment où le courant électrique passant dans le circuit de la remorque est inférieur à la valeur minimale prédéterminée.

16. Système de commande de signal de virage selon la revendication 7, dans lequel chacun des premier et second commutateurs d'indicateurs (18a, 18b) du véhicule et des premier et second commutateurs d'indicateurs (20a, 20b) de la remorque est un commutateur à deux directions et double pôle normalement ouvert.

17. Système de commande de signal de virage selon la revendication 1, dans lequel chacun des indicateurs de virage (3) du véhicule et des indicateurs de virage (4) de la remorque comprend au moins une lampe ayant au moins une ampoule.

18. Système de commande de signal de virage selon la revendication 1, dans lequel le premier relais de clignotant (12), le second relais de clignotant (14) et le dispositif de commutation (16) sont chacun adaptés pour être généralement disposés sur le véhicule.

19. Système de commande de signal de virage selon la revendication 1, dans lequel le véhicule (1) et la remorque (2) ont chacun des indicateurs de virage gauche et droit (3a, 3b, 4a, 4b) et le dispositif de commutation (16) comprend:
un premier commutateur d'indicateur (18a) du véhicule
adapté pour être électriquement connecté à l'indicateur de virage gauche (3a) du véhicule et un second commutateur d'indicateur (18b) du véhicule adapté pour être électriquement connecté à l'indicateur de virage droit (3b) du véhicule, chacun des premier et second commutateurs d'indicateurs du véhicule étant ajustable entre un premier état de commutation, dans lequel l'indicateur de virage connecté n'est pas couplé au premier relais de clignotant (12) et un second état, dans lequel l'indicateur de virage connecté est électriquement couplé au premier relais de clignotant (12); et
un premier commutateur d'indicateur (20a) de la
remorque adapté pour être électriquement connecté à l'indicateur de virage gauche (4a) de la remorque et un second commutateur d'indicateur (20b) de la remorque électriquement connecté à l'indicateur de virage droit (4b) de la remorque, chacun des premier et second commutateurs de la remorque étant ajustable entre un premier état de commutation, dans lequel l'indicateur de virage connecté n'est pas couplé au second relais de clignotant (14) et un second état, dans lequel l'indicateur de virage connecté est électriquement couplé au second relais de clignotant (14), comprenant en outre:
un dispositif d'actionnement (26) configuré pour
ajuster chacun des premier et second commutateurs d'indicateurs (18a, 18b) du véhicule et des premier et second commutateurs d'indicateurs (20a, 20b) de la remorque entre les premier et second états de commutation.
